# EUROPÄISCHE PATENTANMELDUNG

(11) **EP 2 409 808 A1**
(43) Veröffentlichungstag der Anmeldung: **25.01.2012**
(21) Anmeldenummer: 10170451.8
(22) Anmeldetag: 22.07.2010
(51) Int. Cl.: B23K 26/04, B23K 26/14, B23K 26/42

(54) **Laserbearbeitungsmaschine**

(71) Anmelder: Bystronic Laser AG, 3362 Niederönz (CH)
(72) Erfinder: Imboden, Ernest, 4556 Steinhof (CH); Bugmann, Tobias, 4912 Aarwangen (CH); Cathry, Daniel, 3373 Röthenbach b.H. (CH); Broger, David, 3400 Burgdorf (CH); Perrin, Thierry, 4556 Aeschi (CH)
(74) Vertreter: Rosenich, Paul

(57) **Zusammenfassung**

Die Erfindung betrifft eine Laserbearbeitungsmaschine, insbesondere Laserschneidmaschine, welche ausgestattet ist: gegebenenfalls mit einem Arbeitstisch zur Aufnahme eines zu bearbeitenden Werkstücks; einem Arbeitsarm (1) mit wenigstens einem Laserschneidkopf (2), welcher einer Düsenaufnahme (7) und darin eine Düse (D) aufweist, mittels welcher ein Laserstrahl (11) auf das zu bearbeitende Werkstück zu richten ist; Hauptantriebe zur Bewegung des Arbeitsarmes (1) mit dem Laserschneidkopf (2) in Richtungen von X-Y-Z Achsen zur Bearbeitung des Werkstückes; sowie einer Ausrichteinheit zur Justierung des Laserstrahles. Das Wesen der Erfindung liegt darin, dass eine Justierstation (3) im Wirkbereich der Hauptantriebe des Arbeitsarmes (1) vorgesehen ist, welche eine Aufnahmeeinheit (31) für Fixierung der Düse und/oder der Düsenaufnahme (7) beim Düsenzentrieren aufweist. Die Ausrichteinheit ist so ausgebildet, dass im Laserschneidkopf (2) ein, die Düse und/oder die Düsenaufnahme (7) aufnehmender und in X-Y-Richtungen - ohne zusätzliche Verstellvorrichtung, aber mithilfe der vorhandenen Hauptantriebe der Maschine - relativ verschiebbar angeordneter Kopfteil (5B) vorgesehen ist, welcher nach der Düsenzentrierung in der Justierstation (3) in seiner verstellten Lage mithilfe einer lösbaren Klemmvorrichtung (12) im Laserschneidkopf (2) fixierbar ist.

## Beschreibung

### GEBIET DER ERFINDUNG

Die vorliegende Erfindung bezieht sich auf eine Laserbearbeitungsmaschine, insbesondere eine Laserschneidmaschine.

### STAND DER TECHNIK

Die bekannten Laserbearbeitungsmaschinen z.B. zum Schneiden von metallischen Werkstücken haben einen Laserschneidkopf, an dessen dem Werkstück zugewandten Ende sich eine Düse befindet. In dem Laserschneidkopf befindet sich eine Linse, die den Laserstrahl fokussiert. Um einwandfreie und gleichmäßige Schneidergebnisse zu erhalten, ist es notwendig, dass der Brennpunkt des gebündelten Laserstrahls sich in einem festen Abstand zur Werkstückoberfläche befindet. Die Laserbearbeitungsmaschinen werden meistens zum Aus- oder Abschneiden von Konturen aus Blechteilen eingesetzt. Die Bearbeitung solcher Werkstücke erfolgt dadurch, dass ein, aus einer Düsenöffnung einer Düse austretender Laserstrahl auf das zu bearbeitende Werkstück gerichtet und entlang einer vorgegebenen Schneidkontur mittels eines Hauptantriebes geführt wird.

In der erreichbaren Arbeitsqualität spielt jederzeit die exakte Justierung der Fokuslage und des Auftreffpunktes des Laserstrahls auf dem Werkstück eine entscheidende Rolle. Für einen optimalen Schneidprozess bei Laserschneidmaschinen sollte also der Laserstrahl zentrisch durch die Düse eines Schneidkopfes geführt werden, was in der Praxis nicht einfach zu erfüllen ist. Da eine laterale Verschiebung der Linsen im Schneidkopf - verursacht z.B. durch einen Wechsel der Linse oder des Linseneinschubes - eine relative Verschiebung der optischen Achse zur Folge haben kann, ist eine Zentrierung der Düse und ggf. auch eine Fokussierung, und übrigens regelmäßig auch eine Kontrolle notwendig.

Herkömmlich werden die Düsen bei Laserschneidmaschinen so justiert, dass der Düsenkörper gegenüber dem Düsenkopf in X-Y-Richtungen zentriert und dann fixiert wird. Diese Düsenzentrierung wird durch Stellschrauben oder andere zusätzlichen Stellvorrichtungen in der X- oder Y-Achse am Schneidkopf oder am Linseneinschub durchgeführt. Die Einstellung der Fokuslage (Fokussierung) in der Z-Achse wird meistens manuell durch eine Stellschraube durchgeführt.

Unter dem Begriff "Justieren" ist in der vorliegenden Beschreibung einerseits eine Düsenzentrierung in der Ebene der Düsenöffnung (d.h. eine Positionierung der Düse in Richtungen der X-Y-Achsen), andererseits eine Laserstrahlfokussierung, d.h. die Einstellung der Fokuslage (in der Richtung der Z-Achse) zu verstehen.

Die EP-1561538 A1 beschreibt eine Vorrichtung für die Justierung des Laserstrahls bei einer Laserbearbeitungsmaschine, welche mit einer Werkstückaufnahme zur Aufnahme und Lagerung eines zu bearbeitenden Werkstücks und mit einem Laserschneidkopf ausgestattet ist. Zur Justierung des Laserstrahls ist eine Ausrichteinheit vorgesehen, die bei dem in einer Prüfposition positionierten Laserschneidkopf in Ausbreitungsrichtung des Laserstrahls angeordnet ist, und welche ein Düsen-Fixierungselement, ein Projektionselement für die Erfassung einer Projektion des Laserstrahls in einer Bildebene und eine Auswerteeinheit aufweist. Zur Erleichterung der Justierung des Laserstrahls wird auf dem Monitor zusätzlich ein Bildmuster in Form einer Zielscheibe eingeblendet, welche die Soll-Lage des Laserstrahls als Mittelpunkt anzeigt. Eine Lagekorrektur des Laserstrahls erfolgt dabei auch manuell an Justierschrauben.

Die obige manuelle Durchführung der Justierung des Laserstrahls durch Justierschrauben und zusätzlichen Verstellvorrichtungen, die zwischen der Düse und dem Schneidkopf eingebaut sind, ist zu schwerfällig, braucht eine längere Zeit und ist insgesamt dazu nicht geeignet, eine ausreichende Schnittqualität entsprechend den modernen Anforderungen zu gewährleisten.

### WESEN DER ERFINDUNG

Der Erfindung liegt die Aufgabe zugrunde, eine verbesserte Laserbearbeitungsmaschine zu schaffen, durch welche eine schnellere und zuverlässige Kontrolle und Verstellung der Zentrierung und der Fokuslage eines Laserstrahls bei einer Laserbearbeitungsmaschine durchgeführt werden, und dadurch die Bearbeitungsqualität der Maschine erhöht werden kann.

Zur Lösung der gestellten Aufgabe sind wir von der, in der Beschreibungseinleitung zitierten Laserbearbeitungsmaschine - gemäß dem Oberbegriff des Anspruches 1 - ausgegangen, welche erfindungsgemäß die im kennzeichnenden Teil des Anspruches 1 genannten speziellen Merkmale hat.

Vorteilhafte Weiterentwicklungen der erfindungsgemäßen Lösung sind in den abhängigen Ansprüchen angegeben.

Die vorliegende Erfindung bezieht sich also auf eine Laserbearbeitungsmaschine, insbesondere Laserschneidmaschine, welche ausgestattet ist: gegebenenfalls mit einem Arbeitstisch zur Aufnahme eines zu bearbeitenden Werkstücks; einem Arbeitsarm mit wenigstens einem Laserschneidkopf, welcher eine Düsenaufnahme und darin eine Düse aufweist, mittels welcher ein Laserstrahl auf das zu bearbeitende Werkstück zu richten ist; Hauptantriebe zur Bewegung des Arbeitsarmes mit dem Laserschneidkopf mindestens in Richtungen von X-Y Achsen zur Bearbeitung des Werkstückes; und einer Ausrichteinheit zur Justierung des Laserstrahles. Das Wesen der Erfindung wird darin gesehen, dass eine Justierstation im Wirkbereich der vorhandenen Hauptantriebe des Arbeitsarmes vorgesehen ist, welche eine Aufnahmeeinheit für Fixierung der Düse und/oder der Düsenaufnahme zum Düsenzentrieren aufweist. Dabei ist die Ausrichteinheit so ausgebildet, dass im Laserschneidkopf ein, die Düse und/oder die Düsenaufnahme aufnehmendes und in X-Y-Richtungen - ohne zusätzliche Verstellvorrichtung - relativ verschiebbar angeordnetes Kopfelement, vorzugsweise als Kernstück ausgebildet, vorgesehen ist, welches nach der Düsenzentrierung in der Justierstation in seiner verstellten Lage mithilfe einer lösbaren Klemmvorrichtung im Laserschneidkopf fixiert wird.

Durch die obigen Maßnahmen kann der Schneidkopf relativ einfach und billig ausgebildet werden, da auf die zusätzlichen Verstellvorrichtungen beim Schneidkopf nach dem Stand der Technik verzichtet werden kann. Andererseits, wird der größte Vorteil der Erfindung darin gesehen, dass die nötigen Verstellungen zur Zentrierung des Laserstrahles mithilfe der vorhandenen Hauptantriebe der Maschine selbst, ggf. durch CNC-Steuerung, an der vorgeschlagenen Justierstation der Maschine durchgeführt werden können.

In einer bevorzugten Ausführung der Erfindung hat der Laserschneidkopf eine geteilte Ausführung, namentlich besteht er aus einem oberen Kopfteil und einem unterem Kopfteil. Das lateral verschiebbar angeordnete Kopfelement ist dabei in dem unteren Kopfteil als ein zylindrisches Kernstück ausgebildet, welches vorzugsweise mit der koaxialen Düsenaufnahme verbunden ist. Vorzugsweise hat der untere Kopfteil ein äußeres Gehäuse, welches durch den oberen Kopfteil am Arbeitsarm befestigt ist. Das äußere Gehäuse wird also bei der obigen Ausführungsform durch die Hauptantriebe der Maschine in vorgegebenem Maße zur Zentrierung des Laserstrahls verstellt; während dieses Verfahrens ist das Kernstück mit der Düse an der Justierstation fixiert.

Die lösbare Klemmvorrichtung kann nach einem weiteren Merkmal der Erfindung einen Ringkolben aufweisen, welcher in einem axialen Ringraum des Laserschneidkopfes, vorzugsweise des Gehäuses angeordnet und aus einer, das lateral verschiebbare Kopfelement fixierenden Grundstellung in eine, die Fixierung des lateral verschiebbaren Kopfelementes lösende zweite Stellung, und zurück, bewegbar ist. Der Ringkolben kann z.B. pneumatisch im Sinne des Lösens betätigt werden. Der Ringkolben steht ggf. einerseits durch Klemmflächen mit dem lateral bewegbaren Kopfelement, andererseits mit einer, im Sinne der Fixierung wirkenden Klemmeinheit in Wirkverbindung.

In einer bevorzugten Ausführung besteht die Klemmeinheit der lösbaren Klemmvorrichtung aus mindestens einer Federeinheit, vorzugsweise aus mindestens drei axialen Federpaketen.

Bei der Erfindung werden also keine zusätzlichen Stelleinheiten, z.B. Stellmotoren oder ähnliche (wie beim Stand der Technik) an dem Schneidkopf oder an der Zentrierhalterung der Laserschneidmaschine benötigt. Die Aufgabe der Düsenzentrierung ist eigentlich das korrekte Ausrichten des Laserstrahles auf die Öffnung der Düse, was erfindungsgemäß in überraschender Weise so durchgeführt wird, dass bei gelöstem Zustand der Klemmvorrichtung der restliche Schneidkopfteil relativ zur Düse in lateraler Richtung (X-Y) durch die vorhandenen Hauptantriebe der Maschine verschoben wird. Damit kann eine halb- oder vollautomatische Düsenzentrierung einfach und ohne großen Mehrkostenaufwand realisiert werden. Diese Verstellung gemäß der Erfindung ist so konstruiert, dass das bewegliche Teil des unteren Kopfteiles im normalen Schneidbetrieb im Schneidkopf fixiert bzw. gespannt ist.

Neben dem Schneidbereich auf der Maschine, jedoch noch im Wirkungsbereich der Hauptantriebe befindet sich die vorgeschlagene Zentrierhalterung der Justierstation, die als eine Aufnahme und eine Fixierung für die Düsenaufnahme während der Düsenzentrierung dient.

### KURZE BESCHREIBUNG DER ZEICHNUNGEN

Die Erfindung wird nachstehend näher anhand der beiliegenden Zeichnungen erläutert, welche ein bevorzugtes Ausführungsbeispiel der erfindungsgemäßen Laserbearbeitungsmaschine illustrieren. Es zeigt:
- Figur 1 ein Ausführungsbeispiel eines Arbeitsarmes mit einem Schneidkopf der erfindungsgemäßen Laserbearbeitungsmaschine in einer Justierstation anhand einer schematischen Schnittdarstellung;
- Figur 2 einen Querschnitt eines Teiles in Figur 1 in vergrößertem Maßstab;
- Figur 3 eine schematische Darstellung eines zweiten Ausführungsbeispiels der erfindungsgemäßen Laserbearbeitungsmaschine in der Justierstation.

### BESCHREIBUNG DER AUSFÜHRUNGSBEISPIELE DER ERFINDUNG

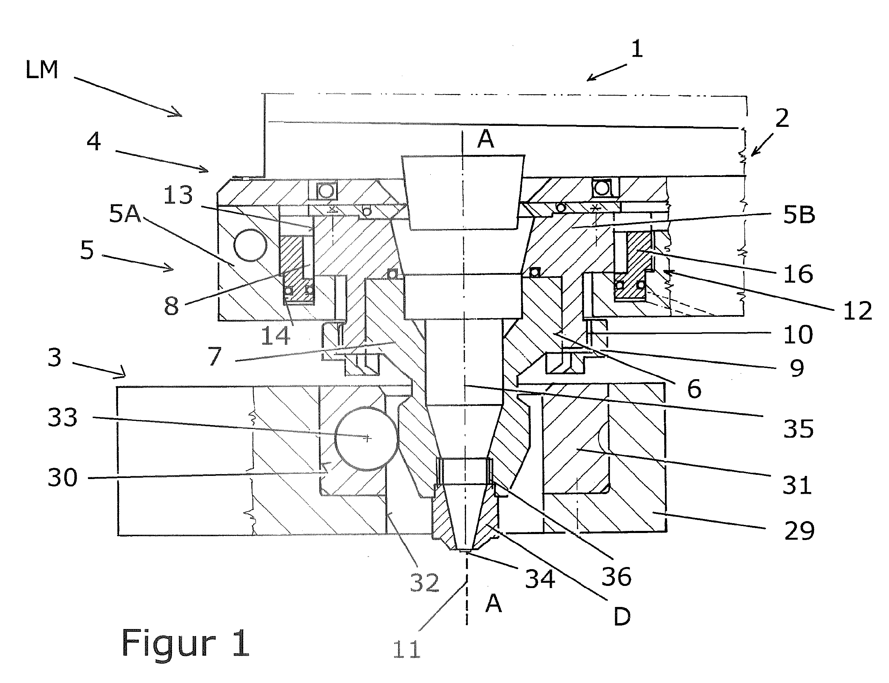

Figur 1 zeigt nur schematisch und teilweise einen Arbeitsarm 1 der erfindungsgemäßen Laserbearbeitungsmaschine LM mit einem Laserschneidkopf 2 in einer Justierstation 3. Die Justierstation 3 ist ggf. neben einem Schnittbereich, jedoch noch im Wirkbereich der Hauptantriebe der Maschine LM (z.B. am nicht dargestellten Arbeitstisch) angeordnet. Der Arbeitsarm 1 ist in an sich bekannter Weise mit den Hauptantrieben (nicht gezeigt) mit einer zentralen, vorzugsweise CNC-Steuerung, ausgerüstet, die geeignet sind, den Arbeitsarm 1 zusammen mit dem Laserschneidkopf 2 entsprechend den jeweils vorgegebenen Koordinaten (in Richtungen der X-Y-Z Achsen) zur Bearbeitung eines, am Arbeitstisch fixierten Werkstückes (wie z.B. nach der EP-0 680 805) zu bewegen.

In Figur 1 ist die erfindungsgemäße Ausbildung und Anordnung des Laserschneidkopfes 2 teilweise in Schnittdarstellung zu sehen. Der Laserschneidkopf 2 hat bei der dargestellten Ausführungsform eine geteilte Ausführung und besteht aus zwei Teilen, namentlich aus einem oberen Kopfteil 4 und einem unteren Kopfteil 5. Der obere Kopfteil 4 ist am Arbeitsarm 1 mitbewegbar befestigt. Im oberen Kopfteil 4 sind die (nicht gezeigten) optischen Elemente des Laserschneidkopfes 2 (Linse, Linsenhalterung, Spiegel, usw.) in an sich bekannter Weise angeordnet.

Der untere Kopfteil 5 hat jedoch eine ganz eigenartige Ausbildung gemäß der Erfindung. Er hat ein lateral verschiebbares Kopfelement und besteht aus einem äußeren Gehäuse 5A, das mit dem oberen Kopfteil 4 lösbar verbunden ist, sowie aus einem Kernstück 5B, welches ringartig ausgebildet und lateral relativ zum Gehäuse 5A zur Düsenzentrierung verschiebbar und nach der Verstellung fixierbar ist.

In dieser Ausführungsform stellt das Kernstück 5B das eingangs erwähnte, lateral verschiebbare Kopfelement dar. In einer mittigen Öffnung 6 des Kernstücks 5B ist eine zylindrische Düsenaufnahme 7 angeordnet, welche an ihrem unteren Ende durch eine Gewindeverbindung mit einer koaxialen Düse D versehen ist.

Im unteren Kopfteil 5, d.h. zwischen dem Gehäuse 5A und dem Kernstück 5B ist ein zylindrischer Innenraum 8 zur lateralen relativen Verstellung des Kernstückes 5B, zusammen mit der Düsenaufnahme 7 und der Düse D ausgebildet. In Figur 1 ist die Düsenaufnahme 7 in der Öffnung 6 des Kernstückes 5B durch eine Überwurfmutter 9 in ihrer Lage lösbar befestigt, die mit einem äußeren Gewinde 10 des Kernstückes 5B verbunden ist.

Im Sinne der Erfindung kann also die gegenseitige radiale/laterale Stellung des Kernstückes 5B zusammen mit der Düsenaufnahme 7 und der Düse D (in X-Y Richtungen) im Verhältnis zum Gehäuse 5A zum Zentrieren der einen Laserstrahl 11 leitenden Düse D im Laserschneidkopf 2 - aber ohne zusätzlichen Verstellvorrichtungen zwischen der Düse D und dem Arbeitsarm 1 (wie beim Stand der Technik) - verstellt werden.

Ein nicht gezeigter Spiegel im oberen Kopfteil 4 soll den Laserstrahl 11 längs einer Achse A-A reflektieren, der in einer zentrierten Soll-Stellung längs des Zentrums des Laserschneidkopfes 2 einfällt und koaxial mit einer Achse der Düse D verläuft (siehe Figur 1).

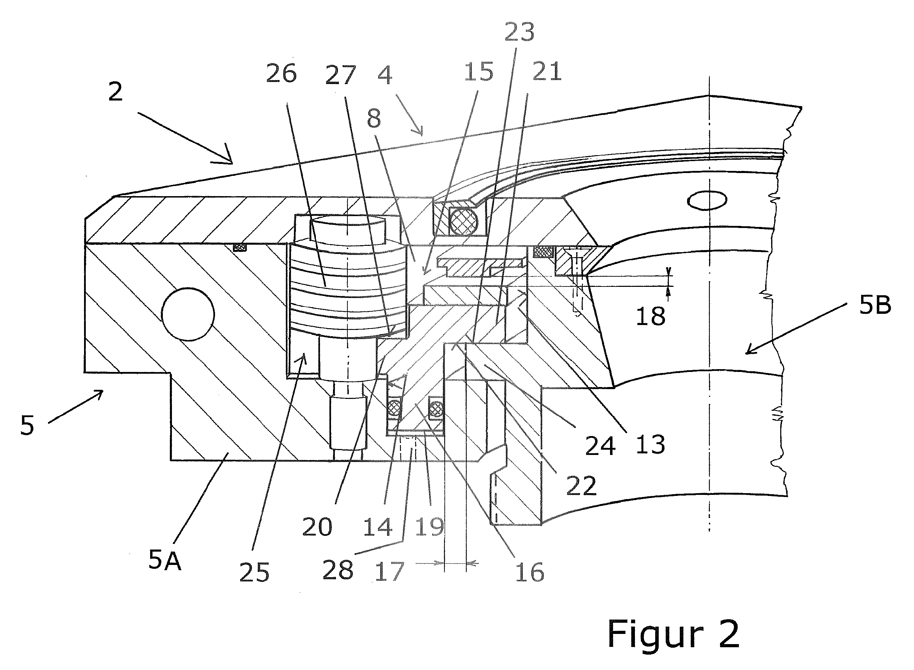

Einerseits zur Fixierung des Kernstückes 5B zusammen mit der Düsenaufnahme 7 und der Düse D in ihrer zentrierten Stellung, andererseits zur Lösung dieser Fixierung zu einer neuen Zentrierung/Verstellung wird erfindungsgemäß eine spezielle lösbare Klemmvorrichtung 12 vorgesehen. Diese Klemmvorrichtung 12 ist beim dargestellten Ausführungsbeispiel zwischen dem Gehäuse 5A und dem Kernstück 5B angeordnet, und ermöglicht dadurch eine relative X-Y-Verschiebung des Kernstückes 5B mit der Düsenaufnahme 7 und der Düse D im unteren Kopfteil 5. Diese Klemmvorrichtung 12 ist aber so konstruiert, dass das Kernstück 5B mit der Düsenaufnahme 7 und der Düse D im normalen Schneidbetrieb der Maschine LM im Schneidkopf 2 fixiert ist. Dies wird eingehender anhand der Figur 2 nachstehend erläutert.

In Figur 2 sind die Einzelheiten der erfindungsgemäßen lösbaren Klemmvorrichtung 12 besser zu sehen. Diese lösbare Klemmvorrichtung 12 ermöglicht - wie oben erwähnt - eine vorbestimmte relative X-Y-Verschiebung des Kernstückes 5B - zusammen mit der Düsenaufnahme 7 und der Düse D - im unteren Kopfteil 5 beim Zentrieren. Bei diesem Ausführungsbeispiel ist der Ringraum 8 zwischen einer äußeren Mantelfläche 13 des Kernstückes 5B und einer inneren Mantelfläche 14 des Gehäuses 5A ausgebildet, in welchem als eine Betätigungseinheit 15 der Klemmvorrichtung 12, vorzugsweise ein Ringkolben 16 in axialer Richtung verschiebbar angeordnet ist. In Figur 2 ist das radiale Spiel des bewegbaren Kernstückes 5B mit dem Bezugszeichen 17 und ein axiales Spiel des Ringkolbens 16 mit dem Bezugszeichen 18 bezeichnet. Die Spiele 17 und 18 haben vorzugsweise einen Wert zwischen 1,0 - 5,0 mm.

Ein pneumatischer Arbeitsraum 19 ist im Ringraum 15 unter dem Ringkolben 16 vorgesehen. Der Ringkolben 16 ist in diesem Falle mit einem radialen Außenflansch 20 und einem radialen Innenflansch 21 versehen. Eine untere Klemmfläche 22 des Innenflansches 21 sitzt auf einer oberen Klemmfläche 23 eines radialen Außenflansches 24 des Kernstückes 5B in der dargestellten fixierenden Grundstellung auf (siehe Figur 2). Der radiale Außenflansch 20 des Ringkolbens 16 wirkt mit einer elastischen Klemmeinheit 25 zusammen, welche bei der dargestellten Ausführung vier Federpakete 26 hat. Diese Federpakete 26 sind z.B. in Form von koaxialen Tellerfedern ausgebildet und vorzugsweise in dem Gehäuse 5A neben dem Ringraum 8 voneinander um 90° versetzt angeordnet.

Diese Zusammenarbeit zwischen der elastischen Klemmeinheit 25 und des Ringkolbens 16 liegt darin, dass das unterste Federelement der Federpakete 26 (siehe Fig.2) ständig eine obere Stützfläche 27 des Außenflansches 20 des Ringkolbens 16 nach unten drückt, und dadurch den Ringkolben 16 in seine dargestellte untere Grundstellung zwingt, in welcher der Ringkolben 16 das Kernstück 5B - zusammen mit der Düsenaufnahme 7 und der Düse D - in ihrer Lage durch die Klemmflächen 22 und 23 im unteren Kopfteil 5 einklemmt, d.h. fixiert.

Wenn der Ringkolben 16 durch Bohrungen 28 und den Arbeitsraum 19 hindurch mit Druckmedium, in diesem Falle mit Druckluft, beaufschlagt wird, bewegt sich der Ringkolben 16 in axialer Richtung nach oben entgegen der Federkraft der Federpakete 26 der elastischen Klemmeinheit 25. Dadurch wird also die Klemmwirkung der Klemmeinheit 25 eingestellt.

In diesem Zustand kann die gegenseitige Lage des Kernstückes 5B - zusammen mit der Düsenaufnahme 7 und der Düse D - sowie des Gehäuses 5A im unteren Kopfteil 5 (und auch die Lage zum Arbeitsarm 1, siehe Fig. 1) mithilfe der vorhandenen X-Y-Hauptantriebe der Maschine LM - ohne zusätzliche Verstellvorrichtungen zwischen der Düse D und dem Arbeitsarm 1 - einfach und zuverlässig zentriert werden.

Nach Absperren des Druckluftstromes zum Arbeitsraum 19 drücken die Federpakete 26 den Ringkolben 16 wieder nach unten in seine Grundstellung, in welcher das Kernstück 5B - zusammen mit der Düsenaufnahme 7 und der Düse D - in ihrer zentrierten Lage durch die Klemmflächen 22 und 23 wieder eingeklemmt ist. Diese Mechanik ist also so konstruiert, dass der bewegliche Teil der Konstruktion, d.h. bei der dargestellten Ausführungsform das Kernstück 5B des unteren Kopfteiles 5 während des normalen Schneidbetriebes der Maschine LM jederzeit fixiert ist.

Auch eine solche Anordnung ist nach der Erfindung ggf. möglich, bei welcher das lateral bewegbare Kopfelement das Gehäuse 5A bildet.

Zurückkehrend zu Figur 1, wird jetzt die Justierstation 3 näher beschrieben. Wie oben erwähnt wurde, ist die Justierstation 3, z.B. neben einem Schneidbereich, jedoch binnen des Wirkbereiches der vorhandenen Hauptantriebe (X-Y-Z) der Laserbearbeitungsmaschine LM angeordnet, und dient als eine Aufnahme und Fixierung für die Düsenaufnahme 7 während der Zentrierung. Die Justierstation 3 hat dazu eine Zentrierhalterung 29, die vorzugsweise am Gestell neben dem Arbeitstisch der Maschine LM fixiert ist. In einer Ausnehmung 30 der Zentrierhalterung 29 ist eine Aufnahmeeinheit 31 gelagert und fixiert.

Die Aufnahmeeinheit 31 dient also als eine Einstelleinheit, und ist mit einer mittigen Bohrung 32 versehen, in welche in diesem Falle drei Rollen 33 teilweise hineinreichen, um die eingeführte Düsenaufnahme 7 in der Justierstation 3 zu zentrieren und zu fixieren. Die drei zentrierenden Rollen 33 sind entlang des Umfangs der Bohrung 32 vorzugsweise zueinander um 120° versetzt angeordnet.

In Figur 1 ist eine Düsenbohrung der Düse D mit 34 und die geometrische Achse der Düse mit 35 bezeichnet, welche im zentrierten Zustand der Düse D koaxial mit der Achse A-A des Laserstrahles 11 ist. Die oben erwähnte Gewindeverbindung zwischen der Düse D und der Düsenaufnahme 7 ist mit dem Bezugszeichen 36 bezeichnet.

Die Arbeitsweise der erfindungsgemäßen Maschine LM nach Figuren 1 und 2 ist, wie folgt:
Soll die Düse D nun justiert bzw. zentriert werden, dann wird der Laserschneidkopf 2 durch übliche Verstellung des Arbeitsarmes 1 zur festgelegten Position der Zentrierhalterung 29 in der Justierstation 3 bewegt. Dann wird die Klemmung des Kernstückes 5B - zusammen mit der Düsenaufnahme 7 und der Düse D - gelöst. Dies bedeutet, dass der Ringkolben 16 der Klemmvorrichtung 12 via die Bohrungen 28 mit Druckluft beaufschlagt wird, und sich der Ringkolben 16 - gegenüber der Federkraft der elastischen Klemmeinheit 25 - in axialer Richtung nach oben bewegt. Dadurch wird also die Klemmwirkung der Klemmeinheit 25 eingestellt.

Danach kann das untere Kopfteil 5 in Richtung der Z-Achse nach unten gefahren werden, wobei das bewegbare Kernstück 5B des unteren Kopfteiles 5 des Laserschneidkopfes 2 mit der Düsenaufnahme 7 und der Düse D im gelösten Zustand vertikal in die Düsenaufnahmeeinheit 31 der Zentrierhalterung 29 der Justierstation 3 eingefahren, aufgenommen und fixiert wird.

Die Kontrolle oder Justierung des Laserstrahles 11 kann dann am einfachsten so durchgeführt werden, dass von unten auf die untere Seite der Düse D ein Plastikband (nicht gezeigt) aufgeklebt wird, um es durch den kurz eingeschalteten Laserstrahl 11 durchschießen zu lassen. Die aktuelle Lage des so gebildeten Loches am Plastikband wird in dem einfachsten Falle vom Bedienungsmann visuell bestätigt. Dann wird manuell oder automatisch die optische Lage des Laserstrahls 11 ermittelt.

Bei einem Ausführungsbeispiel der Erfindung wird das Bild des Loches mittels eines, auf das aufgeklebte Plastikband gerichteten Kameramoduls erfasst (ähnlicherweise wie bei der EP-1 561 538) und als Bildsignal an einen vorliegenden Monitor (nicht gezeigt) der Maschine LM übertragen. Die aktuelle Position des Loches (und indirekt auch des Laserstrahls) wird auf dem Monitor, vorzugsweise an einer Zielscheibe veranschaulicht.

Gegebenenfalls kann das Lochbild des Laserstrahls 11 einer Bildanalyse unterzogen und unmittelbar rechnergesteuert oder manuell ausgewertet werden, und danach werden entsprechende Korrekturen der Positionierung vorgenommen. Erfindungsgemäß wird aber der ermittelte Versatz der optischen Lage des Laserstrahles 11 mithilfe der vorliegenden Hauptachsen-Antriebe X und Y der Maschine LM, bzw. der CNC-Steuerung entsprechend korrigiert. Damit wird der Zentrierungsprozess des Laserstrahls 11 beendet.

Da während dieses Zentrierverfahrens die Düsenaufnahme 7 - mit der Düse D und dem Kernstück 5B - in der Zentrierhalterung 29 der Justierstation 3 fixiert ist, kann das Gehäuse 5A des unteren Kopfteiles 5 relativ zum Zentrum und einer geometrischen Achse 35 der Düse D mittels der Hauptachsenantriebe der Maschine LM in Richtung der Achsen X-Y korrekt ausgerichtet/verstellt werden.

Anschließend wird das Kernstück 5B - mit der Düsenaufnahme 7 und der Düse D - durch Betätigung der Klemmvorrichtung 12 in ihrer eingestellten zentrierten Lage wieder geklemmt. Danach kann der ganze Laserschneidkopf 2 durch den Arbeitsarm 1 aus der Justierstation 3 in Richtung der Z-Achse mithilfe des Hauptantriebes nach oben gefahren werden. Die Düse D ist und bleibt danach zuverlässig im eingestellten zentrierten Zustand.

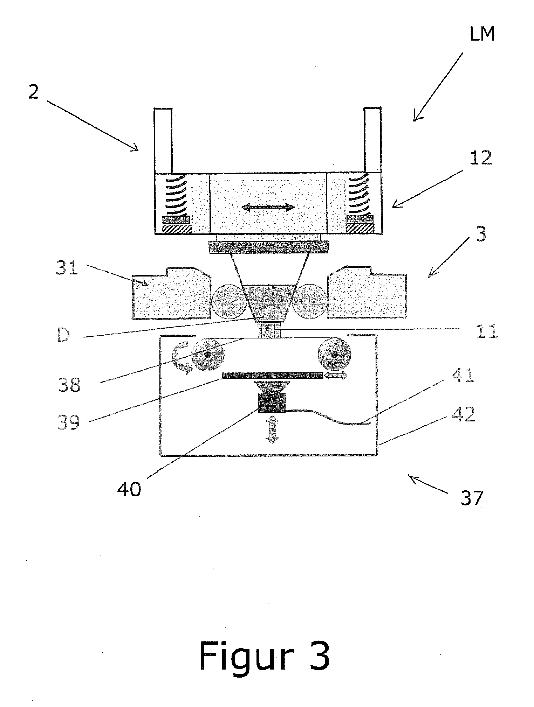

In Figur 3 ist ein weiteres Ausführungsbeispiel der erfindungsgemäßen Laserschneidmaschine LM schematisch dargestellt, bei welchem die Maschine LM nach Figuren 1 und 2 - zum korrekten Ausrichten des Laserstrahls 11 auf die Düsenbohrung der Schneiddüse D - mit einem zusätzlichen Kamerasystem 37 in der Justierstation 3 versehen ist.

Zu diesem Zweck wird - ähnlich, wie oben erwähnt - die Düse D in der Aufnahmeeinheit 31 der Justierstation 3 arretiert, und die Justierung selbst durch laterale Verschiebung des restlichen Schneidkopfes relativ zur Düse D bewerkstelligt, wozu jedoch zuerst die Klemmvorrichtung 12 gelöst werden muss.

Das Kamerasystem 37 der Justierstation 3 enthält bei der, in Figur 3 dargestellten Ausführung:
- Ein Target (Zielstück) 38, das mittels Laserpuls durchschossen wird (z.B. aus einer Kunststofffolie oder Metallfolie, in möglichst dünner Ausführung);
- Eine wegfahrbare Absorptionsplatte 39;
- Eine höhenverstellbare Kamera 40 mit einer bekannten Bildverarbeitungseinheit 41 (nicht näher gezeigt);
- Ein Gehäuse 42 für Staubschutz.

Wie in Figur 3 sichtbar ist, ist das Kamerasystem 37 unter der Aufnahmeeinheit 31 für Fixierung der Düse D in der Justierstation 3 vorgesehen, welches mit dem Target 38, der ausnehmbaren Absorptionsplatte 39 und der höhenverstellbaren Kamera 40 versehen ist. Der Kamera 40 ist die Bildverarbeitungseinheit 41 zugeordnet.

Bevor das Kammersystem 37 eingesetzt werden kann, sollte eine Eichung durchgeführt werden:
- Mit der korrekt justierten Düse D wird in die Aufnahmeeinheit 31 zur Düsenfixierung eingefahren;
- Das Target 38 wird um eine Position transportiert;
- Mittels einem Laserpuls wird ein Loch ins Target 38 geschossen;
- Die Absorptionsplatte 39 wird dann weggefahren;
- Die Kamera 40 erfasst das Loch und speichert seine Lage und Größe. Die Lage wird als Nullpunkt im System abgespeichert;
- Die Absorptionsplatte 39 wird wieder eingefahren.

Danach wird das Justierungsverfahren bei der der erfindungsgemäßen Laserschneidmaschine LM nach Figur 3 durchgeführt, wie folgt:
a) Der Laserschneidkopf 2 fährt zuerst über die Aufnahmeeinheit 31 der Justierstation 3;
b) Die Klemmvorrichtung 12 des Laserschneidkopfes 2 wird dann gelöst;
c) Der Laserschneidkopf 2 wird in die Aufnahmeeinheit 31 zur Düsenfixierung eingefahren;
d) Die Klemmvorrichtung 12 des Laserschneidkopfes 2 wird verriegelt;
e) Das Target 38 wird um eine Position transportiert;
f) Mittels einem Laserpuls wird ein Loch ins Target 38 geschossen;
g) Die Absorptionsplatte 39 wird dann weggefahren;
h) Die Kamera 40 erfasst die Größe und Position das Lochs;
i) Die Absorptionsplatte 39 wird wieder eingefahren;
j) Die Lageposition des Loches wird mit den Eichwerten mittels der Bildverarbeitungseinheit 41 verglichen;
k) Wenn die Lage des Einschusses nicht mit der Eichposition übereinstimmt, dann wird die Klemmvorrichtung 12 des Laserschneidkopfes 2 gelöst und der Fehlbetrag mit den Hauptantrieben der Maschine LM in den CNC-Achsen korrigiert. Die Klemmvorrichtung 12 des Laserschneidkopfes 2 wird danach wieder verriegelt;
l) Zu Kontrollzwecken kann der obige Vorgang nochmals wiederholt werden;
m) Der Laserschneidkopf 2 wird aus der Aufnahmeeinheit 31 der Justierstation 3 herausgefahren, und der Normalbetrieb der Maschine LM kann dann begonnen werden.

In einer weiteren Ausführung kann die Fokuslage ermittelt werden. Dazu werden mit verschiedenen Fokuslagen Löcher ins Target, das nach jedem Beschuss um eine Arbeitsposition verschoben wird, geschossen. Die Kamera wertet die Lochgröße aus. Beim kleinsten Loch lag der Fokus im Target.

Durch die Erfindung ist also ein halb- oder vollautomatisches Zentrieren der Düse möglich, wozu aber keine zusätzlichen Stellmotoren oder Verstellvorrichtungen zwischen dem Düsenkopf und dem Arbeitsarm - wie beim Stand der Technik - notwendig sind. Damit werden die Justierung und die Konstruktion der Laserschneidmaschine bedeutend vereinfacht. Die erfindungsgemäße Lösung ermöglicht, eine Abweichung der Lage des Laserstrahls vom Sollwert zuverlässig und ohne großen Aufwand festzustellen und eine geeignete, einfache, schnelle und reproduzierbare Korrektur zum Zentrieren vorzunehmen.

Es ist zu betonen, dass weitere Ausführungsformen der Laserbearbeitungsmaschine gemäß der Erfindung im Rahmen des Schutzbegehrens nach den beigelegten Ansprüchen vorstellbar sind, zu welchen jedoch - in Kenntnis der vorliegenden Offenbarung der Erfindung - ein Fachmann auf diesem Fachgebiet keine weitere technische Lehre brauchen würde.

Zum Beispiel könnte bei der lösbaren Klemmvorrichtung 12 der Ringkolben 16 auch hydraulisch oder elektro-magnetisch betätigt werden. Die Federpakete 26 könnten ggf. durch Spiralfeder oder andere Federelemente, z.B. pneumatische Federeinheiten ersetzt werden. Bei einer weiteren Ausführungsmöglichkeit könnte die Düsenaufnahme 7 und das Kernstück 5B als ein integriertes, vorzugsweise einstückiges Element ausgebildet werden; damit könnte die Konstruktion des Schneidkopfes 5 weiter vereinfacht werden.

Der einzige Ringkolben 16 (der dargestellten Ausführungsformen) könnte ggf. durch entlang des Ringspalts versetzt angeordnete Kolbenelemente oder Kolbensegmente ersetzt werden. Es ist auch eine solche Ausführung möglich, bei der die Maschine LM mit zwei oder mehr Laserschneidköpfen versehen ist.

Es ist selbstverständlich denkbar, eine Laserschneidmaschine auch ohne Arbeitstisch vorzusehen. Dies kann z.B. bei mobilen Laserschneidmaschinen und übergroßen Werkstücken der Fall sein, wo die Laserschneidmaschine zum Werkstück hin bewegt wird, wobei das Werkstück andernorts fixiert ist, oder aufgrund seiner Größe und seines Gewichtes überhaupt keiner Fixierung bedarf.

### BEZUGSZEICHENLISTE:

- LM -: Laserschneidmaschine
- A-A -: Achse des Laserstrahles
- D -: Düse
- 1 -: Arbeitsarm
- 2 -: Laserschneidkopf
- 3 -: Justierstation
- 4 -: oberer Kopfteil
- 5 -: unterer Kopfteil 5A - Gehäuse
- 5B -: Kernstück
- 6 -: Öffnung
- 7 -: Düsenaufnahme
- 8 -: zylindrischer Innenraum
- 9 -: Überwurfmutter
- 10 -: äußere Gewinde
- 11 -: Laserstrahl
- 12 -: lösbare Klemmvorrichtung
- 13 -: äußere Mantelfläche (des Kernstückes)
- 14 -: innere Mantelfläche (der Gehäuse)
- 15 -: Betätigungselement
- 16 -: Ringkolben
- 17 -: radiales Spiel (des Kernstückes)
- 18 -: axiales Spiel (des Ringkolbens) 19 - Arbeitsraum
- 21 - 20 -: Außenflansch Innenflansch
- 22 -: untere Klemmfläche (des Innenflansches)
- 23 -: obere Klemmfläche (des Außenflansches des Kernstückes)
- 24 -: Außenflansch (des Kernstückes)
- 25 -: Klemmeinheit
- 26 -: Federpaket
- 27 -: obere Stützfläche (des Ringkolbens)
- 28 -: Bohrung (für Druckluft)
- 29 -: Zentrierhalterung
- 30 -: Ausnehmung
- 31 -: Aufnahmeeinheit
- 32 -: zylindrische Bohrung
- 33 -: zentrierende Rolle
- 34 -: Düsenbohrung
- 35 -: geometrische Achse der Düse
- 36 -: Gewindeverbindung
- 37 -: Kamerasystem
- 38 -: Target
- 39 -: Absorptionsfläche
- 40 -: Kamera
- 41 -: Bildverarbeitungseinheit
- 42 -: Gehäuse

## Patentansprüche

1. Laserbearbeitungsmaschine, insbesondere Laserschneidmaschine, welche ausgestattet ist mit
- einem Arbeitsarm (1) mit wenigstens einem Laserschneidkopf (2), welcher eine Düsenaufnahme (7) und darin eine Düse (D) aufweist, mittels welcher ein Laserstrahl (11) auf das zu bearbeitende Werkstück zu richten ist;
- Hauptantrieben zur Bewegung des Arbeitsarmes (1) mit dem Laserschneidkopf (2) mindestens in Richtungen von X-Y- Achsen zur Bearbeitung des Werkstückes;
- einer Ausrichteinheit zur Justierung des Laserstrahles,
**dadurch gekennzeichnet, dass** eine Justierstation (3) im Wirkbereich der Hauptantriebe des Arbeitsarmes (1) vorgesehen ist, welche eine Aufnahmeeinheit (31) für Fixierung der Düse (D) und/oder der Düsenaufnahme (7) zum Düsenzentrieren aufweist, und wobei die Ausrichteinheit so ausgebildet ist, dass im Laserschneidkopf (2) ein, die Düse (D) und/oder die Düsenaufnahme (7) aufnehmendes und in X-Y-Richtungen - mithilfe der vorhandenen Hauptantriebe der Maschine (LM) - relativ verschiebbar angeordnetes Kopfelement (5A; 5B) vorgesehen ist, welches nach der Düsenzentrierung in der Justierstation (3) in seiner verstellten Lage mithilfe einer lösbaren Klemmvorrichtung (12) im Laserschneidkopf (2) fixierbar ist.

2. Die Laserbearbeitungsmaschine nach Anspruch 1, **dadurch gekennzeichnet, dass** der Laserschneidkopf (2) eine geteilte Ausführung hat, namentlich aus einem oberen Kopfteil (4) und einem unterem Kopfteil (5) besteht, wobei das lateral verschiebbar angeordnete Kopfelement in dem unteren Kopfteil (5) als ein zylindrisches Kernstück (5B) ausgebildet ist, welches vorzugsweise mit der koaxialen Düsenaufnahme (7) verbunden ist.

3. Die Laserbearbeitungsmaschine nach Anspruch 2, **dadurch gekennzeichnet, dass** der untere Kopfteil (5) ein äußeres Gehäuse (5A) hat, welches vorzugsweise durch den oberen Kopfteil (4) am Arbeitsarm (1) mitbewegbar befestigt ist.

4. Die Laserbearbeitungsmaschine nach einem der Ansprüche 1-3, **dadurch gekennzeichnet, dass** die lösbare Klemmvorrichtung (12) einen Ringkolben (16) aufweist, welcher in einem axialen Ringraum (8) des Laserschneidkopfes (2), vorzugsweise des Gehäuses (5A) angeordnet, und aus einer, das lateral verschiebbare Kopfelement, vorzugsweise Kernstück (5B) fixierenden Grundstellung in eine, die Fixierung des lateral verschiebbaren Kopfelementes, vorzugsweise Kernstückes (5B) lösende zweite Stellung, und zurück, bewegbar ist.

5. Die Laserbearbeitungsmaschine nach Anspruch 4, **dadurch gekennzeichnet, dass** der Ringkolben (16) - vorzugsweise pneumatisch - im Sinne des Lösens betätigbar ist, und einerseits durch Klemmflächen (22, 23) mit dem lateral bewegbaren Kopfelement, vorzugsweise Kernstück (5B), andererseits mit einer, im Sinne der Fixierung wirkenden Klemmeinheit (25) in Verbindung steht.

6. Die Laserbearbeitungsmaschine nach Anspruch 5, **dadurch gekennzeichnet, dass** die eine Klemmfläche (22) als eine untere Fläche eines Innenflansches (21) des Ringkolbens (16) und die andere Klemmfläche (23) als eine obere Fläche eines Außenflansches (24) des Kernstückes (5B) ausgebildet ist.

7. Die Laserbearbeitungsmaschine nach Anspruch 6, **dadurch gekennzeichnet, dass** der Außenflansch (24) des Kernstückes (5B) und/oder der Innenflansch (21) des Ringkolbens (16) aus Segmenten besteht, welche entlang des Umfangs voneinander mit je einem Abstand angeordnet sind.

8. Die Laserbearbeitungsmaschine nach einem der Ansprüche 5 - 7, **dadurch gekennzeichnet, dass** die Klemmeinheit (25) der lösbaren Klemmvorrichtung (12) aus mindestens einer Federeinheit, vorzugsweise aus mindestens drei axialen Federpaketen (26) besteht.

9. Die Laserbearbeitungsmaschine nach einem der Ansprüche 1-8, **dadurch gekennzeichnet, dass** das, die Düse (D) aufnehmende und in dem unteren Kopfteil (5) relativ verschiebbare Kopfelement, vorzugsweise Kernstück (5B) mit einem radialen Spiel (17) gelagert ist, dessen Wert vorzugsweise zwischen 1,0 - 5,0 mm ist.

10. Die Laserbearbeitungsmaschine nach einem der Ansprüche 1-9, **dadurch gekennzeichnet, dass** das relativ lateral bewegbare Kopfelement, vorzugsweise Kernstück (5B) und die damit koaxiale und mitbewegbare Düsenaufnahme (7) als ein einziges integriertes Element ausgebildet ist.

11. Die Laserbearbeitungsmaschine nach einem der Ansprüche 1-10, **dadurch gekennzeichnet, dass** sie mit einem Arbeitstisch zur Aufnahme des zu bearbeitenden Werkstücks ausgestattet ist.

12. Die Laserbearbeitungsmaschine nach einem der Ansprüche 1-10, **dadurch gekennzeichnet, dass** unter der Aufnahmeeinheit (31) für Fixierung der Düse (D) ein Kamerasystem (37) in der Justierstation (3) vorgesehen ist, welches mit einem Target (38) zum Durchschiessen mittels eines Laserstrahls, einer entfernbaren Absorptionsplatte (39) und einer, vorzugsweise höhenverstellbaren Kamera (40) versehen ist.

13. Die Laserbearbeitungsmaschine nach Anspruch 12, **dadurch gekennzeichnet, dass** der Kamera (40) eine Bildverarbeitungseinheit (41) für die Erkennung der Relativlage von Durchschusslöchern und/oder für die Erkennung und den Vergleich der flächigen Erstreckung von Durchschusslöchern zugeordnet ist.
